# FASCICULE DE BREVET EUROPEEN

(11) **EP 0 675 659 B1**
(45) Date de publication et mention de la délivrance du brevet: **14.11.2001**
(21) Numéro de dépôt: 95400675.5
(22) Date de dépôt: 27.03.1995
(51) Int. Cl.: H04Q 7/22

(54) **Dispositif d'auto-invalidation d'un terminal portatif du type radiotéléphone mobile**
Mobiles Funktelefon-Selbstdeaktivierungsgerät
Mobile radio-telephone self-disabling device

(30) Priorité: 29.03.1994 FR 9403691
(43) Date de publication de la demande: 04.10.1995
(73) Titulaire: ALCATEL MOBILE COMMUNICATION FRANCE, 75008 Paris (FR)
(72) Inventeur: Chanu, Frederic, F-78360 Montesson (FR); Jouin, Christophe, F-75015 Paris (FR)
(74) Mandataire: Lamoureux, Bernard

(56) Documents cités:
- EP-A- 0 135 783
- EP-A- 0 562 890
- ITG-FACHBERICHT 124, Septembre 1993 NEU-ULM, GE, pages 517-526, HIENTZ ET AL. 'Der Short Message Service - ein neuer Dienst der digitalen Mobilkommunikation'

## Description

La présente invention concerne les systèmes de radiotéléphones mobiles et en particulier un dispositif permettant d'auto-invalider un terminal portatif lorsque celui-ci a été volé ou est utilisé de façon non autorisée.

Dans un système à radiotéléphones mobiles du type GSM, chaque utilisateur est en possession d'un terminal portatif ou radiotéléphone avec lequel il peut entrer en communication téléphonique avec tout autre utilisateur de téléphone. Chaque terminal portatif est identifié par un "numéro d'identité d'équipement mobile" (IMEI) connu de la station de contrôle du réseau.

Chaque utilisateur du réseau a en sa possession un "module d'identité d'abonné" (SIM) qui lui est fourni lorsqu'il souscrit un abonnement. Il ne peut utiliser son terminal portatif qu'après avoir inséré sa carte dans son terminal. Cependant, la carte SIM est totalement indépendante du terminal utilisé et peut être utilisée sur des terminaux différents.

Dans le cas d'un terminal volé, il est donc possible au voleur ou à celui qui a récupéré le terminal volé de souscrire un abonnement et de se procurer une carte SIM, et donc de lui permettre l'accès au réseau. C'est pourquoi la station de contrôle maintient à jour une base de données contenant la liste des terminaux volés. Pour interdire l'utilisation du réseau par un terminal volé, la procédure consiste alors à demander, lors de l'établissement de la session avec le terminal, l'identification IMEI de ce terminal, à vérifier que cette identification se trouve dans la base de données, et ensuite à interdire toute communication avec ce terminal s'il s'avère qu'il a été volé. Une telle procédure est dispendieuse en termes de temps et de ressources dans la mesure où le contrôle s'effectue en utilisant le canal de communication de chaque terminal alors que très peu de terminaux sont volés.

C'est pourquoi le but principal de l'invention est de réaliser un dispositif d'auto-invalidation d'un terminal portatif, simple et efficace, sans consommation importante en termes de ressources affectées au terminal.

Un autre but de l'invention est de réaliser un dispositif d'auto-invalidation d'un terminal portatif qui a fait l'objet d'un vol, en réponse aux informations contenues dans un message court d'informations transmis systématiquement à tous les terminaux.

L'objet de l'invention est donc un dispositif d'auto-invalidation d'un terminal portatif du type radiotéléphone comprenant une mémoire tampon destinée à emmagasiner temporairement les messages de service transmis par la station de contrôle du réseau, un des messages reçus contenant la liste des numéros d'identification des terminaux volés, un comparateur pour comparer les numéros d'identification de la liste reçue au numéro d'identification du terminal, et un circuit d'invalidation de la transmission des communications par le terminal en réponse à une comparaison positive du comparateur.

Les buts, objets et caractéristiques de la présente invention seront mieux compris à la lecture de la description qui suit faite en référence aux dessins dans lesquels:
la figure 1 est un schéma synoptique du dispositif d'auto-invalidation selon un mode de réalisation préféré de l'invention, et
la figure 2 est un organigramme des opérations d'auto-invalidation du terminal portatif effectuées par le dispositif selon l'invention.

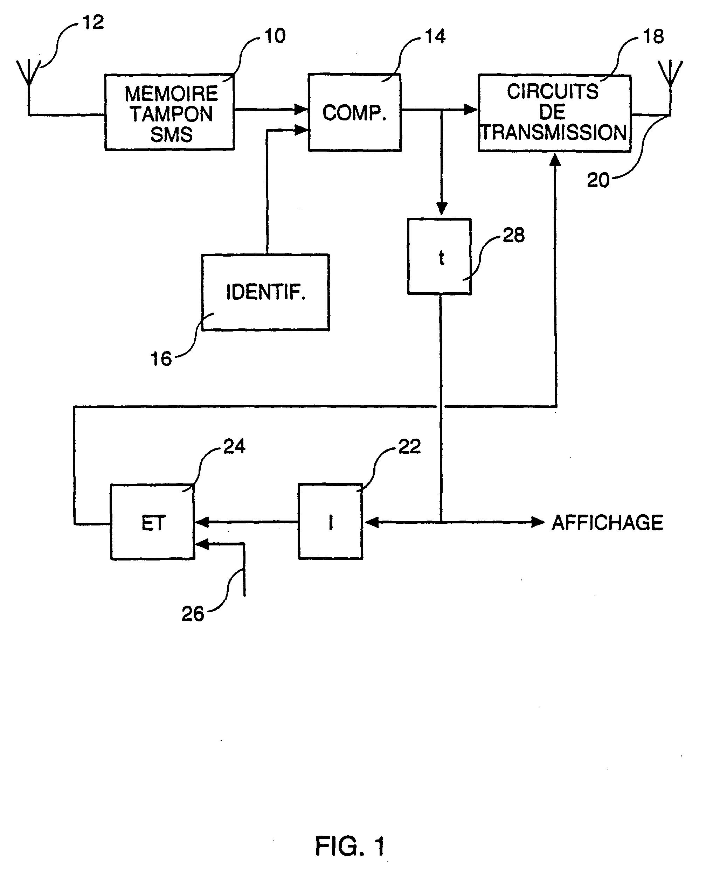

Comme illustré sur la figure 1, le dispositif selon l'invention comporte une mémoire tampon 10 qui emmagasine temporairement les messages courts reçus au moyen de l'antenne de réception 12. On doit noter que ces messages courts communément appelés SMS dans le système GSM sont des messages diffusés à intervalles réguliers (par exemple toutes les 30 secondes) à tous les terminaux d'une zone déterminée.

Après avoir reçu la liste des identifications (IMEI) des terminaux volés, généralement de façon immédiate (mais ceci n'a pas d'importance pour l'invention), une comparaison est effectuée par le comparateur 14 entre les numéros de la liste reçue dans la mémoire tampon 10 et le numéro d'identification du terminal qui se trouve dans un registre 16.

Au cas où la comparaison s'avère positive, c'est à dire que le terminal est un terminal volé, un signal est transmis à la sortie du comparateur 14 aux circuits de transmission 18 pour que ceux-ci informent en retour la station de contrôle, au moyen de l'antenne de transmission 20, que le terminal est un terminal volé.

Au même moment que l'information est transmise à la station de contrôle, le signal de sortie du comparateur 14, généralement sous la forme d'un signal haut correspondant à un bit 1, est transmis à un circuit d'invalidation du terminal formé de l'inverseur 22 et de la porte ET 24.

Si le terminal n'est pas un terminal volé, la sortie du comparateur 14 reste basse et le signal fourni à l'inverseur 22 équivaut à un bit 0, ce qui a pour conséquence que la sortie de l'inverseur est haute (correspondant à un bit 1) et la porte 24 laisse passer le signal d'activation des circuits de transmission fourni sur la ligne 26.

Si par contre, il s'avère que le terminal est volé, ce qui se traduit par une sortie positive du comparateur 14, la sortie de l'inverseur 22 est alors basse, c'est à dire un bit 0 qui bloque la porte ET et d'empêcher toute activation des circuits de transmission 18 par la ligne 26.

On notera qu'un circuit à retard 28 est interconnecté entre la sortie du comparateur 14 et l'inverseur 22. En effet, il peut être utile de retarder l'invalidation du terminal, ou tout du moins de ses circuits de transmission un temps t après une comparaison positive, de sorte que lesdits circuits de transmission aient eu le temps de transmettre l'information à la station de contrôle.

Il peut être utile également d'avertir le possesseur du terminal, qui n'est peut être pas le voleur mais un simple receleur, que le terminal a été volé et qu'il va être invalidé. C'est pourquoi la sortie du comparateur peut être transmise, comme illustré sur la figure 1, vers les circuits d'affichage dans le but d'afficher un message sur l'écran dont dispose généralement le terminal.

On doit noter que la ligne 26 pourrait être purement et simplement la ligne d'alimentation du terminal en provenance des piles, ce qui aurait pour effet de désactiver entièrement le terminal en cas de comparaison positive.

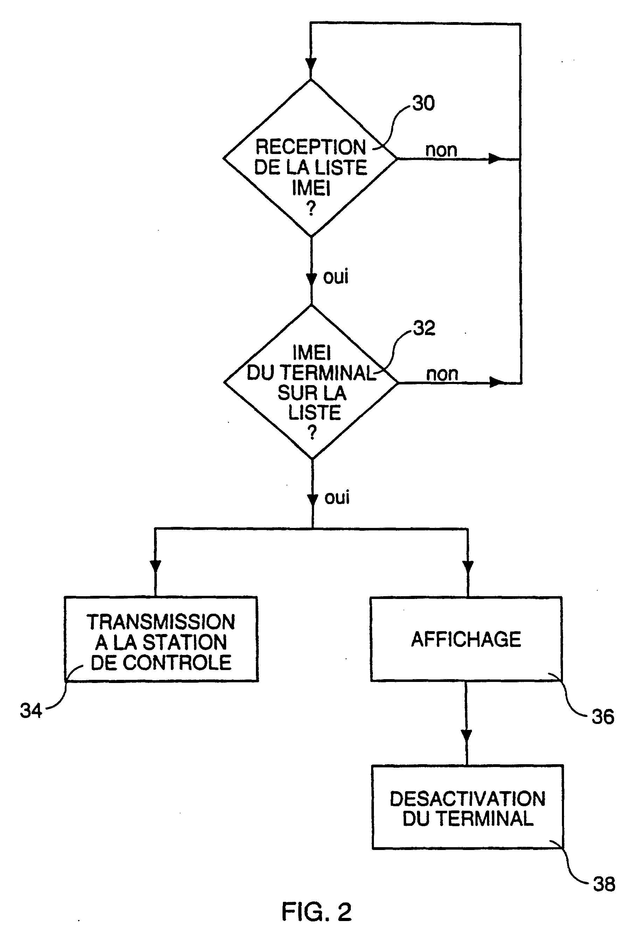

La figure 2 représente un organigramme des opérations effectuées grâce au dispositif d'invalidation selon l'invention.

Au bloc 30, on détermine si la liste IMEI des numéros d'identification des terminaux volés est reçue. Si ce n'est pas le cas, le processus reboucle au début. Si oui, on détermine, au bloc 32, si l'identification du terminal se trouve sur la liste. Si ce n'est pas le cas, le processus se reboucle au début. Si oui, il y a alors deux types d'opérations effectuées. Au bloc 34, il y a transmission d'informations à la station de contrôle indiquant que le terminal est un terminal volé. Le deuxième type d'informations concerne l'affichage sur l'écran du terminal d'un message avertissant son possesseur que le terminal est un terminal volé (bloc 36), et l'invalidation du terminal (bloc 38).

Il est clair que l'organigramme illustré sur la figure 2 peut être réalisé de différentes manières sans sortir du cadre de l'invention et que la réalisation du dispositif d'invalidation qui a été décrit en référence à la figure 1 est une des réalisations possibles parmi d'autres.

## Revendications

1. Dispositif d'auto-invalidation d'un terminal portatif utilisé dans un réseau du type radiotéléphone, comprenant:
- un registre (16) contenant le numéro d'identification du terminal portatif,
- une mémoire (10) pour emmagasiner les messages courts d'informations transmis par la station de contrôle du réseau, **caractérisé en ce que** la mémoire (10) est une mémoire tampon et **en ce que** le dispositif comprend :
- des moyens pour détecter parmi les messages reçus au moins un message contenant la liste des numéros d'identification des terminaux utilisés frauduleusement,
- un comparateur (14) pour comparer ledit numéro d'identification du terminal à chacun des numéros d'identification de ladite liste et
- un circuit d'invalidation (22, 24) de la transmission des communications par le terminal portatif en réponse à une comparaison positive dudit comparateur.

2. Dispositif d'auto-invalidation selon la revendication 1, dans lequel ledit circuit d'invalidation comprend une porte ET (24) à deux entrées dont une première entrée est la ligne (26) d'activation de la transmission des communications par le terminal et dont la deuxième entrée est connectée à la sortie dudit comparateur (14) par l'intermédiaire d'un inverseur (22) de sorte que la transmission des communications par ledit terminal soit invalidée lorsque la sortie dudit comparateur est positive du fait que le numéro d'identification dudit terminal fait partie de ladite liste de numéros d'identification.

3. Dispositif d'auto-invalidation selon larevendication 2, dans lequel la sortie dudit comparateur (14) active l'affichage d'un message d'avertissement à destination du possesseur dudit terminal.

4. Dispositif d'auto-invalidation selon larevendication 1, 2 ou 3, dans lequel la sortie dudit comparateur (14) active la transmission par les circuits de transmission (18) dudit terminal, d'un message d'avertissement à la station de contrôle du terminal destiné à avertir ladite station de contrôle que ledit terminal portatif est utilisé frauduleusement .

5. Dispositif d'auto-invalidation selon la revendication 4, comprenant en outre un circuit à retard (28) interconnecté entre la sortie dudit comparateur (14) et l'entrée dudit circuit d'invalidation (22, 24) de sorte que le terminal ait la possibilité de transmettre ledit message d'avertissement avant qu'il n'y ait invalidation des circuits (18) de transmission des communications dudit terminal en cas de comparaison positive.

6. Dispositif d'auto-invalidation selon l'une quelconque des revendications précédentes, dans lequel ledit circuit d'invalidation (22, 24) désactive l'alimentation dudit terminal en réponse à une comparaison positive dudit comparateur (14).

7. Dispositif d'auto-invalidation selon l'une quelconque des revendications précédentes utilisé dans un radiotéléphone de type GSM.

8. Méthode d'auto-invalidation d'un terminal portatif utilisé dans un réseau du type radiotéléphone comprenant les étapes suivantes:
détection de la réception un message contenant la liste des terminaux utilisés frauduleusement,
comparaison des numéros d'identification de ladite liste avec le numéro d'identification dudit terminal, et
invalidation de la transmission d'informations par ledit terminal en cas de comparaison positive.

9. Méthode selon la revendication 8 comportant en outre l'affichage d'un message sur l'écran dudit terminal en cas de comparaison positive.

10. Méthode selon la revendication 8 ou 9 comportant en outre la transmission d'un message d'avertissement à la station de contrôle du réseau en cas de comparaison positive.

## Patentansprüche

1. Vorrichtung zur Selbstdeaktivierung eines in einem Mobiltelefonnetz verwendeten Endgerätes, mit:
- einem Register (16), das die Identifizierungsnummer des tragbaren Endgerätes enthält,
- einem Speicher (10) zum Speichern von von der Steuerstation des Netzes übertragenen Kurzmeldungen, **dadurch gekennzeichnet, dass** der Speicher (10) ein Pufferspeicher ist, und dass die Vorrichtung umfasst:
- Mittel zum Erfassen wenigstens einer Meldung, die die Liste der Identifizierungsnummern der betrügerisch verwendeten Endgeräte enthält, unter den empfangenen Meldungen,
- einem Komparator (14) zum Vergleichen der Identifizierungsnummer des Endgeräts mit jeder der Identifizierungsnummer der Liste, und
- einer Deaktivierungsschaltung (22, 24) zur Deaktivierung der Übertragung der Kommunikationen des tragbaren Endgeräts in Reaktion auf einen positiven Vergleich des Komparators.

2. Vorrichtung zur Selbstdeaktivierung nach Anspruch 1, bei der die Deaktivierungsschaltung ein Und-Gatter (24) mit zwei Eingängen umfasst, von dem ein erster Eingang die Leitung (26) zur Aktivierung der Übertragung der Kommunikationen durch das Endgerät ist und der zweite Eingang mit dem Ausgang des Komparators (14) über einen Inverter (22) verbunden ist, so dass die Übertragung der Kommunikationen durch das Endgerät deaktiviert wird, wenn der Ausgang des Komparators positiv ist, weil die Identifizierungsnummer des Endgeräts Teil der Liste der Identifizierungsnummern ist.

3. Vorrichtung zur Selbstdeaktivierung nach Anspruch 2, bei der der Ausgang des Komparators (14) das Anzeigen einer Hinweismeldung für den Besitzer des Endgerätes aktiviert.

4. Vorrichtung zur Selbstdeaktivierung nach Anspruch 1, 2, oder 3, bei der der Ausgang des Komparators (14) die Übertragung einer Hinweismeldung über die Übertragungsschaltungen (18) des Endgeräts an die Steuerstation des Endgeräts aktiviert, die dazu dient, die Steuerstation zu benachrichtigen, dass das tragbare Endgerät betrügerisch verwendet wird.

5. Vorrichtung zur Selbstdeaktivierung nach Anspruch 4, ferner mit einer Verzögerungsschaltung (28), die zwischen dem Ausgang des Komparators (14) und den Eingang der Deaktivierungsschaltung (22, 24) geschaltet ist, so dass das Endgerät die Möglichkeit hat, die Hinweismeldung zu übertragen, bevor die Deaktivierung der Schaltungen (18) zur Übertragung der Kommunikationen des Endgeräts im Falle eines positiven Vergleichs eintritt.

6. Vorrichtung zur Selbstdeaktivierung nach einem beliebigen der vorhergehenden Ansprüche, bei der die Deaktivierungsschaltung (22, 24) die Versorgung des Endgeräts in Reaktion auf einen positiven Vergleich des Komparators (14) deaktiviert.

7. Vorrichtung zur Selbstdeaktivierung nach einem beliebigen der vorhergehenden Ansprüche, verwendet in einem Funktelefon vom GSM-Typ.

8. Verfahren zur Selbstdeaktivierung eines tragbaren Endgerätes, das in einem Funktelefonnetz verwendet wird, mit den folgenden Schritten:
- Erfassen des Empfangs einer Meldung, die die Liste der betrügerisch verwendeten Endgeräte enthält,
- Vergleichen der Identifizierungsnummern der Liste mit der Identifizierungsnummer des Endgeräts, und
- Deaktivieren der Informationsübertragung durch das Endgerät im Falle eines positiven Vergleichs.

9. Verfahren nach Anspruch 8, das ferner das Anzeigen einer Meldung auf den Schirm des Endgeräts im Falle eines positiven Vergleichs umfasst.

10. Verfahren nach Anspruch 8 oder 9, das ferner das Übertragen einer Hinweismeldung an die Steuerstation des Netzes im Falle eines posivitiven Vergleichs umfasst.

## Claims

1. Self-disabling device for a portable terminal used in a mobile telephone network, said device including:
- a register (16) holding an identifier number of the portable terminal,
- a memory (10) for temporarily storing short information messages transmitted by the control station of the network, **characterized in that** the memory (10) is a buffer memory and **in that** the device includes:
- means for detecting among the messages received at least one message containing a list of identifier numbers of terminals used fraudulently,
- a comparator (14) for comparing said identifier number of the terminal with each identifier number in said list, and
- a circuit (22, 24) for disabling transmission of calls by the portable terminal in response to a positive comparison by said comparator.

2. Self-disabling device according to claim 1 wherein said disabling circuit includes an AND gate (24) having two inputs a first of which is connected to a line (26) for activating transmission of calls by the terminal and the second of which is connected to the output of said comparator (14) via an inverter (22) so that transmission of calls by said terminal is disabled if the output of said comparator is positive because the identifier number of said terminal is in said list of identifier numbers.

3. Self-disabling device according to claim 2 wherein the output of said comparator (14) activates display of a warning message to the person using said terminal.

4. Self-disabling device according to claim 1, 2 or 3 wherein the output of said comparator (14) activates transmission of a warning message to the control station by transmit circuits (18) of said terminal to advise said control station that said portable terminal is being used fraudulently.

5. Self-disabling device according to claim 4 further including a time-delay circuit (28) between the output of said comparator (14) and the input of said disabling circuit (22, 24) so that the terminal is able to transmit said warning message before the transmit circuits (18) of said terminal are disabled in response to a positive comparison.

6. Self-disabling device according to any one of the preceding claims wherein said disabling circuit (22, 24) deactivates the power supply of said terminal in response to a positive comparison by said comparator (14).

7. Self-disabling device according to any one of the preceding claims used in a GSM type mobile telephone system.

8. Self-disabling method for disabling a portable terminal used in a mobile telephone network, said method comprising the following steps: detecting reception of a message containing a list of terminals used fraudulently, comparing identifier numbers from said list with the identifier number of said terminal, and disabling transmission of information by said terminal in response to a positive comparison.

9. Method according to claim 8 further comprising display of a message on a screen of said terminal in response to a positive comparison.

10. Method according to claim 8 or 9 further comprising transmission of a warning message to the control station of the network in response to a positive comparison.
